# EUROPEAN PATENT APPLICATION

(11) **EP 4 517 409 A1**
(43) Date of publication of application: **05.03.2025**
(21) Application number: 24176974.4
(22) Date of filing: 21.05.2024
(51) Int. Cl.: G02B 27/01, G02B 27/28

(54) **ARTIFICIAL REALITY DEVICES WITH LIGHT BLOCKING CAPABILITY AND PROJECTION OF VISUAL CONTENT OVER REGIONS OF BLOCKED LIGHT**

(30) Priority: 31.08.2023 US 202318459330
(71) Applicant: Meta Platforms, Inc., Menlo Park, CA 94025 (US)
(72) Inventor: VanWyk, Eric, Menlo Park (US); Kuo, Grace Elizabeth, Menlo Park (US)
(74) Representative: Murgitroyd & Company

(57) **Abstract**

A head-mounted display includes a filter that at least partially blocks light emitted from a light source. In some examples, the light source may be a liquid crystal display that emits polarized light, and the filter may be a polarizing component. Using the filter, the head-mounted display may filter out the light source directed to the head-mounted display. The filtered out region may appear as a grayscale region or a blacked out region mixed with a real-world environment. When the head-mounted display takes the form of an augmented reality device, the head-mounted display may use a display to project visual content onto the filtered out region, while permitting a view of a real-world environment. The visual content may include images, video(s), and/or text, with the images, video(s), and/or text being relevant to the user.

## Description

### TECHNICAL FIELD

This application is directed to artificial reality devices, and more particularly, to head-mounted displays that may block certain light sources and project content on a display at a location(s) corresponding to the blocked light source(s).

### BACKGROUND

Artificial reality devices, such as augmented reality devices, may project visual content onto glass lenses, thus allowing the artificial reality device to merge a real-world environment with the visual content. As a result, a user of the artificial reality device may see, for example, computer-generated images superimposed on the user's real-world surroundings.

### SUMMARY

Some examples of the present disclosure are directed to a head-mounted display that may include multiple displays that may be tiled together to provide an artificial reality experience to users. One of the displays may include a relatively low resolution display, while another display may include a high resolution display.

According to a first aspect, there is provided a head-mounted display comprising: one or more processors; and memory coupled with the one or more processors, the memory storing executable instructions that when executed by the one or more processors cause the head-mounted display to: filter, from a light source, light incident on a lens; obtain visual content; and cause a display to project the visual content on the lens at a location corresponding to the filtered light.

The head-mounted display may further comprise a filter disposed on the lens. The filter may be configured to generate the filtered light by at least partially blocking the light source. The executable instructions when executed by the one or more processors may further cause the head-mounted display to obtain, on the lens, the location corresponding to the filtered light.

The executable instructions when executed by the one or more processors may further cause the head-mounted display to adjust an output of a filter that generates the location corresponding to the filtered light.

The executable instructions when executed by the one or more processors may further cause the head-mounted display to obtain the visual content associated with an account of a user of the head-mounted display.

The executable instructions when executed by the one or more processors may further cause the head-mounted display to cause the display to present the visual content based on a social media account or a video streaming account. The social media account or the video streaming account may be associated with the account.

The head-mounted display may further comprise one or more image sensors. The executable instructions when executed by the one or more processors may further cause the head-mounted display to: obtain, from the one or more image sensors, information from the light source; filter the light source to generate the filtered light; and utilize the information to generate the visual content.

The executable instructions when executed by the one or more processors may further cause the head-mounted display to obtain the information from a second display that generates the light source. The information may comprise relevant information to a user of the head-mounted display.

The executable instructions when executed by the one or more processors may further cause the head-mounted display to: obtain the location based on a grayscale region or a blacked out region; and cause the display to superimpose the visual content over the grayscale region or the blacked out region.

According to a second aspect, there is provided a head-mounted display comprising: a lens comprising a first surface and a second surface opposite the first surface; a filter disposed on the first surface, the filter configured to block polarized light incident on the lens; and a display configured to project visual content onto the second surface at a location corresponding to the blocked polarized light.

The filter may comprise a polarizing component.

The polarizing component may comprise a polarizer film.

The polarizing component may comprise at least one of one or more switchable polarizers or an array of switchable polarizers.

The head-mounted display may further comprise one or more image sensors configured to obtain information from the polarized light.

The head-mounted display may further comprise: one or more processors; and memory coupled with the one or more processors, the memory storing executable instructions that when executed by the one or more processors cause the head-mounted display to project the visual content based on the obtain the information from the one or more image sensors.

The one or image sensors may be further configured to obtain an image corresponding to a fiducial. The executable instructions when executed by the one or more processors may further cause the head-mounted display to project the visual content based on the fiducial.

The head-mounted display may further comprise one or more processors configured to cause the display to project the visual content as motion images.

According to a third aspect, there is provided a method for presenting content from a head-mounted display, the method comprising: obtaining light from a polarized light source; filtering the light; and projecting, by the head-mounted display, visual content over the filtered light.

The method may further comprise: determining a location of the light incident on a lens; and projecting the visual content at the location.

Projecting the visual content may comprise: obtaining information from the light source; and projecting, based on the obtaining information, the visual content.

Filtering the light may comprise adjusting an output of a switchable polarizer.

Additional advantages will be set forth in part in the description which follows or may be learned by practice. The advantages will be realized and attained by means of the elements and combinations particularly pointed out in the appended claims. It is to be understood that both the foregoing general description and the following detailed description are exemplary and explanatory only and are not restrictive, as claimed.

### BRIEF DESCRIPTION OF THE DRAWINGS

Certain features of the subject technology are set forth in the appended claims. However, for purpose of explanation, several examples of the subject technology are set forth in the following figures.
FIG. 1 illustrates an example of an artificial realty device.
FIGS. 2 and 3 illustrate alternative views of an artificial reality device.
FIG. 4 illustrates a schematic diagram of an artificial reality device.
FIGS. 5 and 6 illustrate an example application of artificial reality device in an environment.
FIG. 7 illustrates an additional example application of artificial reality device in an environment.
FIG. 8 illustrates an additional example application of artificial reality device in an environment.
FIG. 9 illustrates a flowchart showing one or more operations of an artificial reality device.
FIG. 10 illustrates an alternate flowchart showing one or more operations of an artificial reality device.

### DETAILED DESCRIPTION

Some examples of the present disclosure will now be described more fully hereinafter with reference to the accompanying drawings, in which some, but not all examples of the disclosure are shown. Indeed, various examples of the disclosure may be embodied in many different forms and should not be construed as limited to the examples set forth herein. Like reference numerals refer to like elements throughout. As used herein, the terms "data," "content," "information" and similar terms may be used interchangeably to refer to data capable of being transmitted, received and/or stored in accordance with examples of the disclosure. Moreover, the term "exemplary," as used herein, is not provided to convey any qualitative assessment, but instead merely to convey an illustration of an example. Thus, use of any such terms should not be taken to limit the scope of examples of the present application. It is to be understood that the methods and systems described herein are not limited to specific methods, specific components, or to particular implementations.

As defined herein a "computer-readable storage medium," which refers to a non-transitory, physical or tangible storage medium (e.g., volatile or non-volatile memory device), may be differentiated from a "computer-readable transmission medium," which refers to an electromagnetic signal.

As referred to herein, a Metaverse may denote an immersive virtual space or world in which devices may be utilized in a network in which there may, but need not, be one or more social connections among users in the network or with an environment in the virtual space or world. A Metaverse or Metaverse network may be associated with three-dimensional (3D) virtual worlds, online games (e.g., video games), one or more content items such as, for example, images, videos, non-fungible tokens (NFTs) and in which the content items may, for example, be purchased with digital currencies (e.g., cryptocurrencies) and other suitable currencies. In some examples, a Metaverse or Metaverse network may enable the generation and provision of immersive virtual spaces in which remote users may socialize, collaborate, learn, shop and/or engage in various other activities within the virtual spaces, including through the use of Augmented Reality (AR)/Virtual Reality (VR)/Mixed Reality (MR).

Also, as used in the specification including the appended claims, the singular forms "a," "an," and "the" include the plural, and reference to a particular numerical value includes at least that particular value, unless the context clearly dictates otherwise. The term "plurality", as used herein, means more than one. When a range of values is expressed, another example includes from the one particular value and/or to the other particular value. Similarly, when values are expressed as approximations, by use of the antecedent "about," it will be understood that the particular value forms another example. All ranges are inclusive and combinable. It is to be understood that the terminology used herein is for the purpose of describing particular aspects only, and is not intended to be limiting.

It is to be appreciated that certain features of the disclosed subject matter which are, for clarity, described herein in the context of separate examples, can also be provided in combination in a single example. Conversely, various features of the disclosed subject matter that are, for brevity, described in the context of a single example, can also be provided separately, or in any sub-combination. Further, any reference to values stated in ranges includes each and every value within that range. Any documents cited herein are incorporated herein by reference in their entireties for any and all purposes.

It is to be understood that the methods and systems described herein are not limited to specific methods, specific components, or to particular implementations. It is also to be understood that the terminology used herein is for the purpose of describing particular examples only and is not intended to be limiting.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The predicate words "configured to", "operable to", and "programmed to" do not imply any particular tangible or intangible modification of a subject, but, rather, are intended to be used interchangeably. In one or more implementations, a processor configured to monitor and control an operation or a component may also mean the processor being programmed to monitor and control the operation or the processor being operable to monitor and control the operation. Likewise, a processor configured to execute code may be construed as a processor programmed to execute code or operable to execute code.

Phrases such as an aspect, the aspect, another aspect, some aspects, one or more aspects, an implementation, the implementation, another implementation, some implementations, one or more implementations, an example, the example, another example, some examples, one or more examples, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "exemplary" is used herein to mean "serving as an example, instance, or illustration". Any embodiment described herein as "exemplary" or as an "example" is not necessarily to be construed as preferred or advantageous over other embodiments. Furthermore, to the extent that the term "include", "have", or the like is used in the description or the claims, such term is intended to be inclusive in a manner similar to the term "comprise" as "comprise" is interpreted when employed as a transitional word in a claim. References in this description to "an example", "one example", or the like, may mean that the particular feature, function, or characteristic being described is included in at least one example of the present embodiments. Occurrences of such phrases in this specification do not necessarily all refer to the same example, nor are they necessarily mutually exclusive.

When an element is referred to herein as being "connected" or "coupled" to another element, it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. § 112, sixth paragraph, unless the element is expressly recited using the phrase "means for" or, in the case of a method claim, the element is recited using the phrase "step for".

The subject technology is directed to artificial reality devices (e.g., AR devices, MR devices) designed to present visual content over one or more regions of blocked light. For example, artificial reality devices described herein may include a filter (e.g., polarizing film) that blocks, or at least partially blocks, certain types of light, such as polarized light. "Polarized light" may refer to light from a light source that oscillates in a predefined direction. As a non-limiting example, a liquid crystal display (LCD) may generate polarized light. The location(s) of light blocked or partially blocked by the filter may generally appear as a "blank slate" (e.g., grayscale region, blacked out region) on one or more lenses of an artificial reality device, with the blank slate being surrounded by a real-world environment. Further, artificial reality devices described herein may include a display (e.g., projector) designed to present visual content onto the one or more lenses, and in particular, present the visual content onto the location(s) corresponding to the blank slate by, for example, superimposing the visual content over the blank slate.

The visual content presented by artificial reality devices described herein may be beneficial in several applications. For example, a light source (e.g., polarized light source such as a television or monitor), in a public setting (e.g., airport, waiting area, restaurant) may present undesired or unappealing visual content. However, an artificial reality device described herein may present visual content, such as motion images (e.g., video) requested by the user or determined to be desired visual content based on, for example, an artificial intelligence engine in communication with the artificial reality device. As non-limiting examples, the requested or desired visual content may include motion images from a server in communication a video streaming service to which the user holds an account or a social media service to which the user holds an account, or from content stored on memory of the artificial reality device. Beneficially, the artificial reality device described herein may use the filter to effectively block, or otherwise make a user of the artificial reality device desensitized to, the undesired visual content from the light source, and replace the undesired visual content with visual content more likely to be desired by the user.

In another example, a light source includes a monitor that presents visual content in the form of arrival and departure information (e.g., cities and associated times of arrival or departure) at an airport. Generally, a person at an airport is interested in a particular arrival or departure. Artificial reality devices described herein may effectively block light (e.g., arrival and departure information for the airport) from the light source and present visual content corresponding to a relevant arrival or departure over the blocked light. Artificial reality devices described herein may obtain the relevant flight information in a variety of manners. For example, an artificial reality device may obtain the relevant information by communicating with a user account held by a social media service, communicating with a user account held by the airline associated with the relevant flight information, or receiving information from a user's digital calendar. Alternatively, using one or more image sensors (e.g., cameras), an artificial reality device may capture an image(s) of the monitor and determine textual information (e.g., arrival and departure information) from the image(s) based on optical character recognition (OCR), as a non-limiting example. Once the artificial reality device determines the textual information, the artificial reality device may obtain the relevant information through one or more of the aforementioned means.

In yet another example, a light source includes a monitor that presents visual content in the form of a menu at a restaurant. Some users may be interested in a select or limited set of menu items provided by the restaurant. Beneficially, artificial reality devices described herein may effectively block light (e.g., full menu) from the light source and present visual content corresponding to the select/limited set of menu items over the blocked light. Artificial reality devices described herein may obtain the relevant menu items in a variety of manners. For example, an artificial reality device may obtain the relevant information by requesting user food preferences (e.g., meat-eating, vegetarian) from the user, communicating with a user account held by a social media service, or communicating with the restaurant associated with the menu. Alternatively, using one or more image sensors (e.g., cameras), an artificial reality device may capture an image(s) of the monitor and determine textual information (e.g., menu information) from the image(s) based on OCR, as a non-limiting example. Once the artificial reality device determines the textual information, the artificial reality device may obtain the relevant information through one or more of the aforementioned means. As yet another example, an artificial reality device may use the one or more image sensor to locate an indicium (e.g., trademark of the restaurant, code such as a QR code), which provides the artificial reality device with an indication of the menu (or how to obtain the data corresponding to the menu). The trademark may be associated with a franchise restaurant or the code may provide a Uniform Resource Locator (URL), either of which may allow the artificial reality device to connect to a server to obtain the data corresponding to the menu associated with the restaurant.

For purposes of user privacy, artificial reality devices described herein may provide a user with an option to opt-in and share the user's account information stored on, for example, a social media service, a digital calendar associated with the user, a video streaming service, or other account airline account.

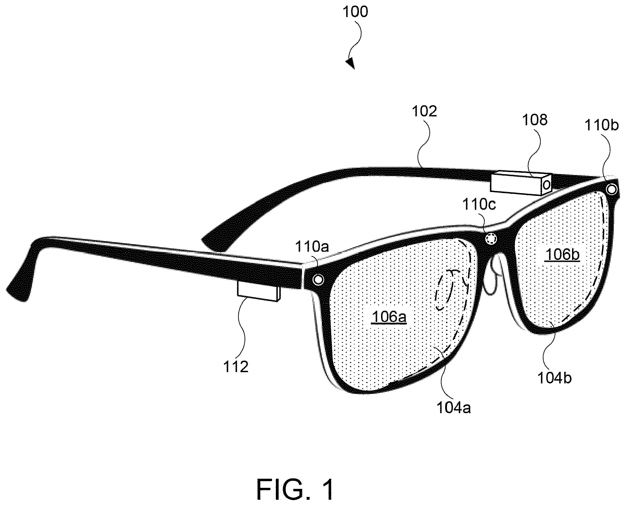

These and other examples are discussed below with reference to FIGS. 1-10. However, those skilled in the art will readily appreciate that the detailed description given herein with respect to these Figures is for explanatory purposes only and should not be construed as limiting.

FIG. 1 illustrates an example AR device, or MR device, that takes the form of a head-mounted display (HMD) 100 associated with artificial reality content. The HMD 100 may include an enclosure 102 (e.g., an eyeglass frame). The HMD 100 may further include a lens 104a and a lens 104b, each of which is held by the enclosure 102. In some examples, the HMD 100 is implemented in the form of augmented-reality glasses. Accordingly, each of the lenses 104a and 104b may be at least partially transparent to visible light to allow a user of the HMD 100 to view a real-world environment through each of the lenses 104a and 104b. Alternatively, the lenses 104a and 104b may function as image combiners that combine virtual content (e.g., computer generated images) with the real-world environment. In this regard, each of the lenses 104a and 104b may take the form of a waveguide or a partially reflective surface, as non-limiting examples of image combiners.

As shown, the lens 104a and the lens 104b may include a filter 106a and a filter 106b, respectively. The filter 106a and the filter 106b may regulate light through the lens 104a and the lens 104b, respectively. In some examples, each of the filters 106a and 106b is polarizing component (e.g., polarizing film) that functions as an optical filter designed to block, or at least partially block, polarized light incident on the lens 104a and the lens 104b, respectively. Each of the filters 106a and 106b may block polarized light from a polarized light source, such as an LCD monitor, as a non-limiting example. Also, in some examples, each of the filters 106a and 106b is global polarizer that generally blocks polarized light incident on the lens 104a and the lens 104b, respectively, at a given angle in a predetermined manner. Alternatively, in some examples, each of the filters 106a and 106b is a switchable polarizer (e.g., electrically controlled switchable polarizer) that functions as an adjustable polarizer to vary their respective light blocking capabilities (e.g., increased or decreased light blocking). When the filters 106a and 106b take the form of switchable polarizers, the filters 106a and 106b may form an array of switchable polarizers.

The HMD 100 may further include a display 108 (e.g., projector) designed to project visual content onto the lens 104a and/or the lens 104b, which may be subsequently reflected to the user's eyes. As non-limiting examples, the visual content may include textual information, still images, and/or motion images (e.g., video). Accordingly, when the HMD 100 takes the form of augmented-reality glasses, a user may view both a real-world environment as well as the visual content, provided by the display 108, superimposed over the real-world environment. Moreover, at one or more locations in which the filters 106a and 106b block, or partially block, light from a light source, the display 108 may project the visual content onto the lens 104a and/or the lens 104b at a location(s) corresponding to the blocked light, where the "location" is based on a portion the lens 104a and/or the lens 104b at which the light is blocked by the filter 106a and/or the filter 106b, respectively. Put another way, the display 108 may superimpose the visual content over the location on the lens 104a and/or the lens 104b corresponding to the blocked light. This will be shown and described in further detail below.

Additionally, the HMD 100 may include one or more image sensors. For example, the HMD 100 may include an image sensor 110a and an image 11 0b, each of which may be representative of one or more additional image sensors. Each of the image sensors 110a and 110b may be referred as a front camera that functions to capture an environment (e.g., real-world environment) at which a user of the HMD 100 is viewing. The HMD 100 may also include an image sensor 110c (e.g., rear camera, an eye tracking system) used to, for example, track the vergence movement of the user wearing the HMD 100.

Also, the HMD 100 may include an audio device 112. In some examples, the audio device 112 takes the form of one or more microphones designed to receive and convert ambient and/or user-based sounds into electrical signals. In some examples, the audio device 112 takes the form of one or more audio speakers designed to convert electrical signals into sound waves (e.g., acoustical energy). In some examples, the audio device 112 may be a combination of a microphone and an audio speaker(s). Accordingly, the audio device 112 may provide electrical signals and/or sound waves in conjunction with artificial reality content. The audio device 112 is shown at a single, particular location on the enclosure 102. However, the audio device 112 may generally be positioned at other locations of the enclosure 102. Also, the HMD 100 may include additional audio devices having any feature shown and described for the audio device 112, and may be positioned at different locations on the enclosure 102.

Although a particular design of the HMD 100 is shown, the HMD 100 may take other forms. For example, the HMD 100 may include a strap, or band, that wraps around a user's head. Alternatively, or in combination, the HMD 100 may include a single lens.

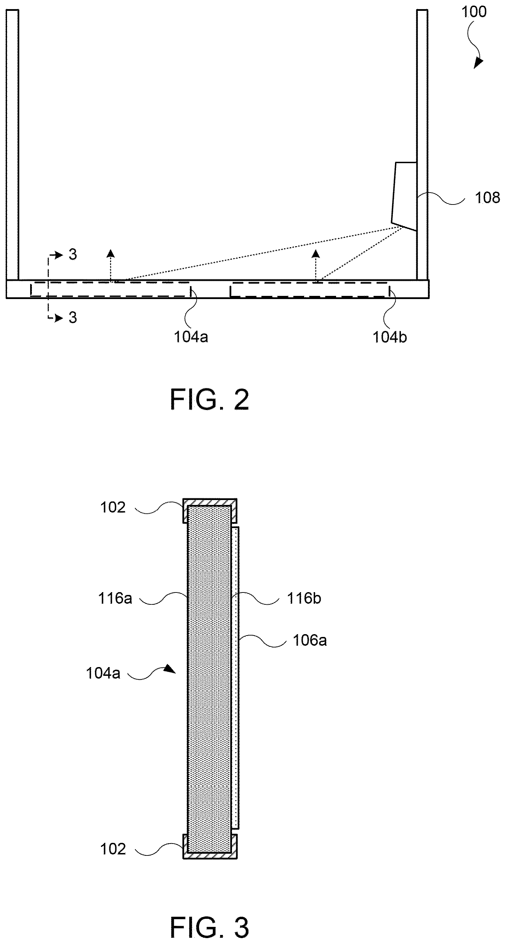

FIG. 2 illustrates an aerial view of the HMD 100. During operation, the display 108 may project visual content (represented by dotted lines) to the lens 104a and/or 104b. As shown in FIG. 2, the display 108 projects visual content to each of the lenses 104a and 140b.

FIG. 3 illustrates a cross-sectional view of the HMD 100, taken along line 3-3 in FIG. 2. As shown, the lens 104a is positioned in the enclosure 102. The lens 104a may include a surface 116a and a surface 116b opposite the surface 116a. The surface 116a of the lens 104a may provide a surface onto which the visual content from the display 108 (shown in FIG. 2) is projected. Also, the surface 116b of the lens 104a provides a surface onto which the filter 106a may be disposed or applied. In this regard, the lens 104a may be positioned between the filter 106a and visual content projected on the surface 116a of the lens 104a. It should be noted that the lens 104b (shown in FIGS. 1 and 2) may include any features and/or functionality shown and described herein for the lens 104a.

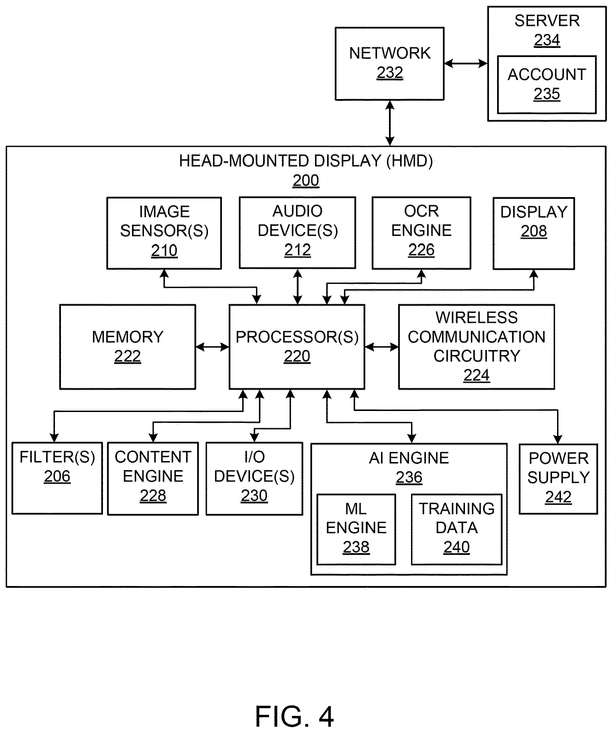

FIG. 4 illustrates a schematic diagram of an HMD 200. The HMD 200 may be part of an artificial reality device similar to those shown and/or described herein. Further, the HMD 200 may include any features described herein for an HMD. The HMD 200 may include one or more processors 220. The one or more processors 220 may include one or more microcontrollers, one or more micro electromechanical systems (MEMS), a central processing unit, a graphics processing unit, an integrated circuit (e.g., system on a chip, or SOC), or a combination thereof.

The HMD 200 may further include memory 222. The memory 222 may include read-only memory (ROM) and/or random access memory (RAM). The memory 222 may store instructions that can be executed by the one or more processors 220. For example, the memory 222 can store instructions for VR applications, AR applications, MR applications and/or the like that are executable by the one or more processors 220. Further, the one or more processors 220 and the memory 222 may be incorporated into the HMD 200 (e.g., a device similar to the HMD 100 shown in FIG. 1). Alternatively, the one or more processors 220 and the memory 222 may be incorporated into a computing device (e.g., smartphone) that may be separate from the HMD 200 and in communication with the HMD 200. The HMD 200 may further include wireless communication circuitry 224 configured to establish and communicate a connection with other devices through a wireless communication protocol (e.g., BLUETOOTH^{®} connection, WI-FI^{®} connection).

The HMD 200 may further include one or more image sensors 210 used to obtain images (e.g., still images, motion images (video)) external to the HMD 200. In some examples, the one or image sensors 210 include a camera(s) designed to capture images of the real-world environment external to the HMD 200. In some examples, the one or more image sensors 210 are used to track eye movement of the user of the HMD 200. In some examples, the one or more image sensors 210 are used to capture images of text (e.g. written language) located on one or more captured images. The one or more image sensors 210 of the HMD 200 may perform any or all of the aforementioned functions.

The HMD 200 may further include one or more audio devices 212. The one or more audio devices 212 may take the form of one or more audio transducers. In some examples, the one or more audio devices 212 include a microphone designed to convert received soundwaves into electrical signals. Further, in some examples, the one or more audio devices 212 include an audio speaker designed to convert electrical signals into soundwaves that may be heard by a user of the HMD 200. The one or more audio devices 212 may include a combination of a microphone(s) and an audio speaker(s).

The HMD 200 may further include an optical character recognition (OCR) engine 226 designed to recognize textual information (e.g., words, phrases) from images. The HMD 200 may use the OCR engine 226 to analyze images captured by the one or more image sensors 210 for textual information. In some examples, the OCR engine 226 is stored on the memory 222. Further, in some examples, the OCR engine 226 is implemented in hardware and run on the one or more processors 220.

The HMD 200 may further include a display 208 designed to present visual content by, for example, projecting visual content onto one or more lenses (not shown in FIG. 4) of the HMD 200. The display 208 may include a projector, a micro display, and/or relay optics used to project visual content to the one or more lenses, where the visual content is reflected onto the user's eye(s). The one or more processors 220 may generate instructions and provide the instructions to the display 208, thereby causing the display 208 to project the visual content.

The HMD 200 may further include one or more filters 206 that covers the one or more lenses, respectively. In some examples, the one or more filters 206 include a polarizing component. In this regard, the one or more filters 206 may include a polarizing film designed to block, or at least partially block, light by filtering polarized light from a polarized light source. As shown in FIG. 4, the one or more filters 206 are coupled (e.g., electrically coupled) to the one or more processors 220 and take the form of one or more switchable polarizers that function as an adjustable polarizer, based on instructions from the one or more processors 220, to vary the light blocking capabilities. However, in other examples, the one or more filters 206 are passive polarizers that maintain a constant polarizing capability, and thus not controlled by the one or more processors 220.

In order to determine the type(s) of visual content to present, the HMD 200 may further include a content engine 228. The content engine 228 may determine the visual content and provide, via the one or more processors 220, instructions to the display 208 to present the visual content. The content engine 228 may the determine which type(s) of visual content to present from a variety of sources. For example, the HMD 200 may include one or more input/output (I/O) devices 230 (e.g., buttons) that allow a user to provide an input, via the one or more I/O devices 230, to the one or more processors 220, thereby allowing the user to request specified visual content. Alternatively, the one or more audio devices 212 may capture spoken language from the user, and the one or more processors 220 may use an automatic speech recognition (ASR) service to convert spoken language into recognizable text by the one or more processors 220, thus allowing the user to speak a request for the visual content. Further, in some examples, the content engine 228 is implemented in hardware and run on the one or more processors 220.

The visual content may be stored as a multimedia file on the memory 220. Alternatively, the HMD 200 may communicate, via a network 232 (e.g., Internet), with a server 234 to retrieve data corresponding to the visual content. In some examples, the server 234 is a host for a video streaming service, thus allowing the HMD 200 to download or stream, via the wireless communication circuitry 224, content from an account 235 (e.g., video streaming account) of the user through the video streaming service. The video streaming service may include live (e.g., in real time or near real time) content or on-demand content, as non-limiting examples. In some examples, the server 234 is a host for a social media service, thus allowing the HMD 200 to download or stream, via the wireless communication circuitry 224, content from an account 235 (e.g., a social media account) of the user through the social media service. In some examples, the server 234 is a host for the user's cloud-based information from the user's mobile device (e.g., smartphone), thus allowing the HMD 200 to download or stream content (e.g., a user's cloud storage account, user's email account, a user's digital calendar) from an account 235 associated with the user's mobile device.

Also, the HMD 200 may further include an artificial intelligence (Al) engine 236 designed to predict or decide a user preference for visual content. The AI engine 236 may include a machine learning (ML) engine 238 and training data 240 used to train the ML engine 238. As non-limiting examples, the training data 240 may include viewing history (of visual content) by the user, either by using or not using the HMD 200, viewing history by the collective users of a video streaming service, or a combination thereof. The content engine 228 may use the AI engine 236 to select the visual content, and provide instructions for the display 208, via the one or more processors 220, to present the selected visual content.

Also, the HMD 200 may further include a power supply 242. The power supply 242 may include one or more batteries, including one or more rechargeable batteries. In this regard, the I/O devices 230 may further include a port used to receive electrical energy from, for example, a power outlet to operate the HMD 200 and/or charge the power supply 242.

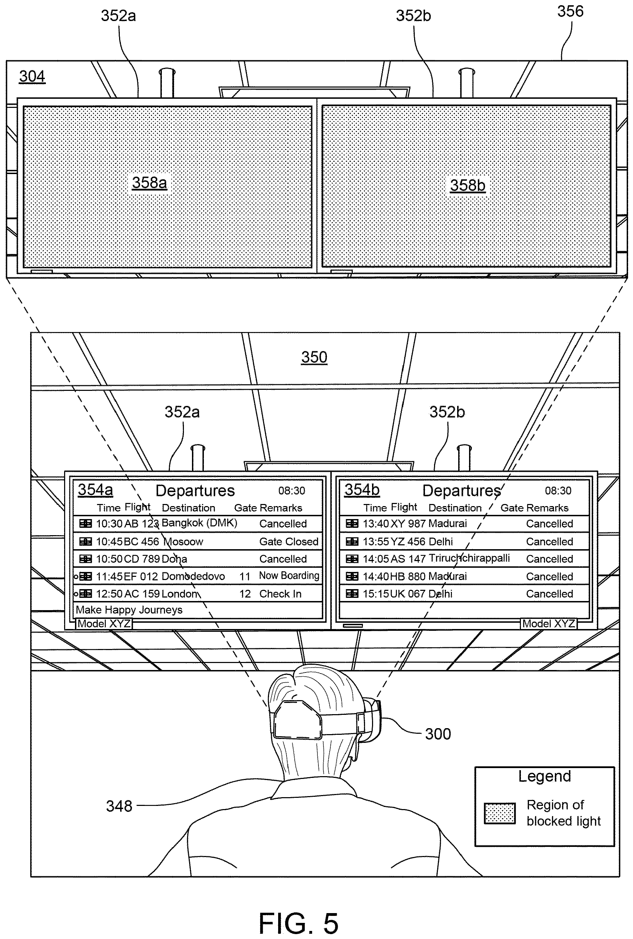

FIGS. 5-8 show and describe exemplary applications for an HMD with a filter designed to block light from a light source. The exemplary light source(s) may include a light source that generates or otherwise emits polarized light that may be blocked, or at least partially blocked, by one or more filters of an HMD shown and/or described herein. Also, the HMDs shown and/or described in FIGS. 5-8 may include any components and associated features shown and/or described herein for an HMD.

FIG. 5 illustrates an example of a user 348 in an environment 350 (e.g., real-world environment). As shown, the user 348 is wearing an HMD 300. Further, the user 348 is viewing a light source 352a and a light source 352b, each of which are emitting polarized light. In some examples, each of the light sources 352a and 352b includes an LCD monitor. The environment 350 may include a public transport area, such as an airport or a train station (as non-limiting examples). In this regard, the light source 352a and the light source 352b generate light 354a and 354b, respectively, with the light 354a and the light 354b presenting visual content (e.g., textual information) in the form of departure information for several departures from the public transport area. Generally, the user 348 is interested in only one departure, e.g., the departure with the flight or train that the user 348 has booked.

An enlarged view 356 represents what the user 348 may see when viewing the environment 350 through one or more lenses 304 of the HMD 300. For example, based on one or more filters (e.g., polarizing filters such as the one or more filters 206 shown in FIG. 4), the light 354a and the light 354b from the light source 352a and the light source 352b, respectively, is blocked, thus generating a location 358a and a location 358b, respectively, of blocked light on the one or more lenses 304. Put another way, the light 354a and the light 354a in the environment 350 may be viewable to users (not wearing the HMD 300) other than the user 348, but may appear to the user 348 as a location 358a and a location 358b, respectively, of blocked light at the one or more lenses 304.

In some examples, the HMD 300 may include one or more image sensors (e.g., one or more image sensors 210 shown in FIG. 4) that identify the light source 352a and the light source 352b, and more particularly, identify the light source 352a and the light source 352b as polarized light sources. For example, the light source 352a and the light source 352b each includes a model number (e.g., MODEL XYZ) that may be captured by the one or more image sensors. Using the model number, the HMD 300 may determine through, for example, a lookup table stored on a memory (e.g., memory 222 shown in FIG. 4) or by communicating with a server through a network (e.g., server 234 and network 232 shown in FIG. 4). Alternatively, or in combination, the HMD 300 may identify the location 358a and the location 358b on or at the one or more lenses 304 as a grayscale region (as shown in FIG. 5) or a blacked out region. In this regard, the grayscale region or the blacked out region may generate a specified or predetermined frequency of light that may be captured by the one or more image sensors and identified by the HMD 300.

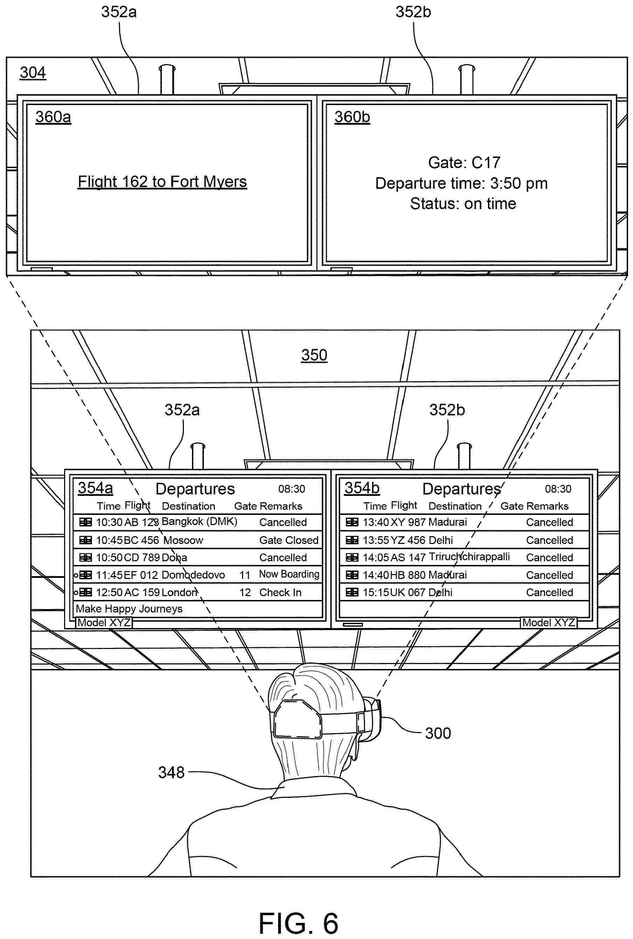

FIG. 6 illustrates the HMD 300 generating and presenting visual content 360a and visual content 360b by superimposing the visual content 360a and visual content 360b onto the location 358a and the location 358b, respectively, shown in FIG. 5. Put another way, the HMD 300, using a display (e.g., display 208 shown in FIG. 4), may project the visual content 360a and visual content 360b onto the one or more lenses 304 and over the light 354a and the light 354b, respectively, shown in FIG. 5, both of which may be characterized as blocked light. Moreover, the visual content 360a and visual content 360b may be relevant visual content to the user 348. For example, the visual content 360a (e.g., "Flight 162 to Fort Myers") may include a flight number and location/destination for the user 348 for a flight the user 348 has booked, and the visual content 360b (e.g., "Gate: C17, Departure time: 3:50 pm, Status: on time") may include gate information, departure time, and status of the booked flight. Accordingly, the user 348, when viewing through the HMD 300, may be staring in a direction of the light source 352a and the light source 352b, but view the visual content 360a and the visual content 360a (e.g., the relevant information) provided by the HMD 300. Also, the HMD 300 may present the visual content 360a and visual content 360b in a variety of font types, font sizes, font colors, etc., several, if not all, of which may be selected by the user 348. Beneficially, the HMD 300 provides the user 348 with relevant information to the user 348, and effectively blocks irrelevant information to the user 348 in the environment 350, while also allowing the user 348 to see environment 350 around the visual content 360a and the visual content 360b.

In order to determine relevant information for the user 348, the HMD 300 may obtain user input in several ways. For example, the HMD 300 may obtain an input through one or more I/O devices (e.g., one or more I/O devices 230 shown in FIG. 4) that allow the user 348 to input the relevant information to the HMD 300. As another example, the HMD 300 may access an account (e.g., account 235 shown in FIG. 4) held by the user 348 that includes the relevant information. In this regard, the HMD 300 may access a social media account, a calendar, or an airline account of the user 348. As yet another example, the HMD 300 may include an AI engine (e.g., AI engine 236 shown in FIG. 4) used to predict the relevant information, e.g., predict the departure information of the user 448 based on past travel and/or by obtaining information from an account of the user 448. As yet another example, the HMD 300 may include one or more audio devices (e.g., one or more audio devices 212 shown in FIG. 4) that may receive speech from the user 348, thus allowing the user 348 to speak the relevant information to the HMD 300.

In order to determine information from the light sources 352a and 352b, the HMD 300 may include one or more image sensors (e.g., one or more image sensors 210 shown in FIG. 4) used to capture images of the textual information from the lights 354a and 354b. Additionally, the HMD 300 may include an OCR engine (e.g., OCR engine 226 shown in FIG. 4) designed to determine the textual information from the captured images of the lights 354a and 354b. Alternatively, the HMD 300 may communicate with a server (e.g., server 234 shown in FIG. 4) that hosts data corresponding to the departure information, and obtain the departure information.

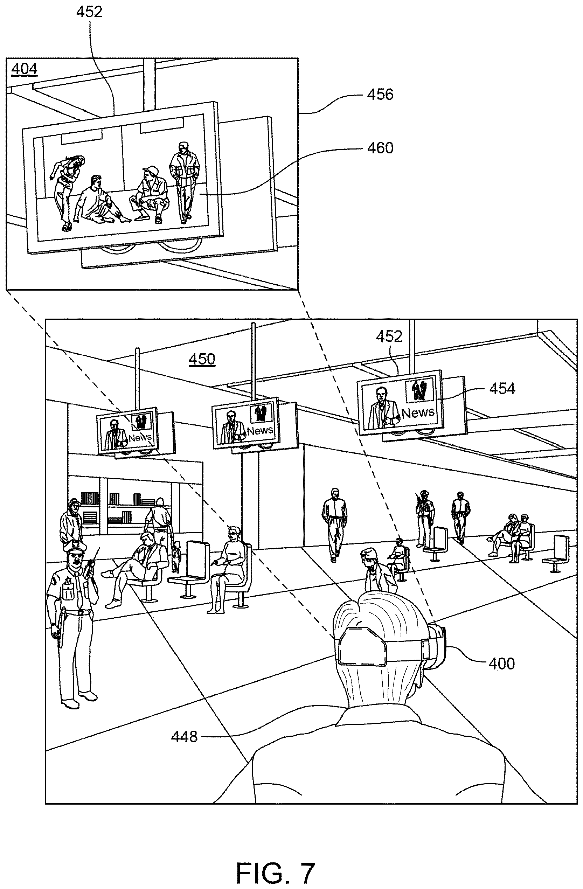

FIG. 7 illustrates an example of a user 448 in an environment 450 (e.g., real-world environment). As shown, the user 448 is wearing an HMD 400. Further, the user 448 is viewing a light source 452 (e.g., LCD monitor) that is emitting polarized light. The environment 450 may include a public waiting area, as a non-limiting example. As shown, the light source 452a generates light 454, with the light 454 presenting visual content (e.g., motion images or video) in the form of a news broadcast, which may be uninteresting to the user 448.

An enlarged view 456 represents what the user 448 may see when viewing the environment 450 through one or more lenses 404 of the HMD 400. For example, based on one or more filters (e.g., one or more filters 206 shown in FIG. 4), the light 454 is blocked and a resultant location (e.g., similar to the locations 358a and 358b shown in FIG. 4) of blocked light is established at the one or more lenses 404. The HMD 400 may generate and present visual content 460 by superimposing the visual content 460 over the light 454, which is blocked by the HMD 400 as viewed by the user 448. Moreover, the visual content 460 may be more interesting or appealing visual content to the user 448. The visual content 460 may include visual content stored, by the user 448 based on a user preference, on a memory (e.g., memory 222 shown in FIG. 4) of the HMD 400. As another example, the HMD 400 may access an account (e.g., account 235 shown in FIG. 4) to obtain visual content from a video streaming service or a social media service associated with the user 448. As yet another example, the HMD 400 may receive inputs from the user 448 to determine the visual content 460 that is presented, or the HMD 400 may include an AI engine (e.g., AI engine 236 shown in FIG. 4) used to predict or suggest the visual content 460 to be presented by the HMD 400. As yet another example, the HMD 400 may include one or more audio devices (e.g., one or more audio devices 212 shown in FIG. 4) that may receive speech from the user 448, thus allowing the user 448 to speak the relevant information to the HMD 300. Moreover, the one or more audio device may generate soundwaves (e.g., the intended audio) in conjunction with the visual content 460. Accordingly, the user 448, when viewing through the HMD 400, may appear to others around the user 448 to be watching/view the light 454 from the light source 452, so as to view the same content as the others. Beneficially however, the user 448 is viewing the visual content 460 without the others knowing, which may be relatively appealing content to the user 448.

In some examples, the HMD 400 may include one or more image sensors (e.g., one or more image sensors 210) used to capture the light 454 (e.g., the media) presented by the light source 452 and determine the content presented on the light source 452. The HMD 400 may further include an AI engine (e.g., AI engine 236 shown in FIG. 4) used to predict whether the visual content from light source 452 is undesirable.

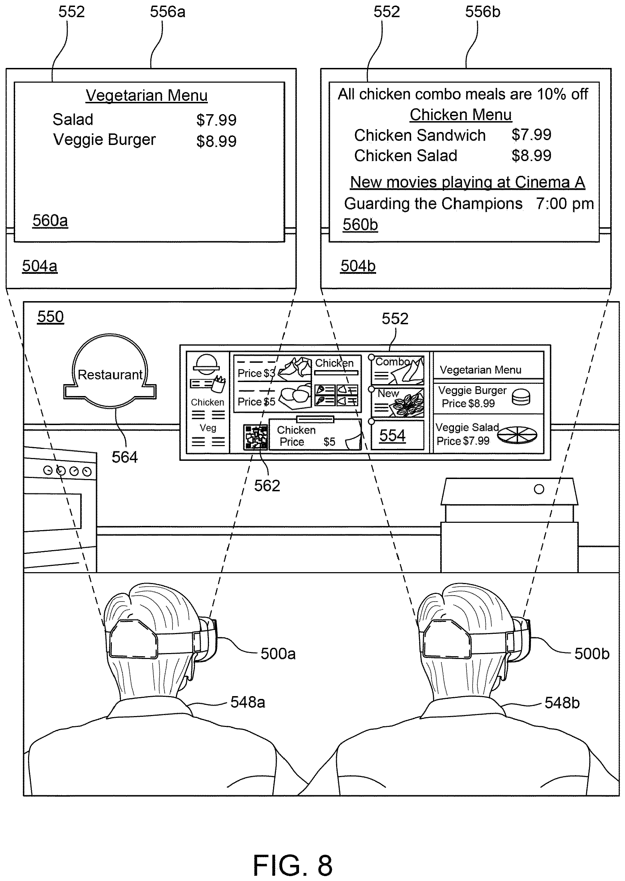

FIG. 8 illustrates an example of a user 548a and a user 548b in an environment 550 (e.g., real-world environment). As shown, each of the user 548a and the user 548b is wearing an HMD 500a and an HMD 500b, respectively. Further, each of the user 548a and the user 548b is viewing a light source 552 (e.g., LCD monitor) that is emitting polarized light. The environment 550 may include a restaurant, as a non-limiting example. As shown, the light source 552 generates light 554, with the light 554 presenting visual content (e.g., textual information and still images) in the form of a menu of the restaurant, of which some options of the menu may be uninteresting to at least one of the user 548a or the user 548b while other options of the menu are of more interesting to at least one of the user 548a or the user 548b.

An enlarged view 556a represents what the user 548a may see when viewing the environment 550 through one or more lenses 504a of the HMD 500a. For example, based on one or more filters (e.g., one or more filters 206 in FIG. 5), the light 554 is blocked and a resultant location (e.g., similar to the locations 358a and 358a shown in FIG. 4) of blocked light is established at the one or more lenses 504a of the HMD 500a. The HMD 500a may generate and present visual content 560a by superimposing the visual content 560a over the light 554, which is blocked by the HMD 500a as viewed by the user 548a. Moreover, the visual content 560a may be more interesting or appealing visual content to the user 548a. For example, the visual content 560a may include a portion of the menu (e.g., "Vegetarian Menu") that is appealing to the user 548a. While the light source 552 provides the entire menu of meat-based options and vegetarian options, the user 548a may be a vegetarian and thus only be interested in the vegetarian options. In this regard, the HMD 500a may present visual content 560a in the form of desired menu options for the user 548a.

In order to determine dietary preferences of the user 548a, the user 548a may store dietary preferences on a memory (e.g., memory 222 shown in FIG. 4) of the HMD 500a. As another example, the HMD 500a may access an account (e.g., account 235 shown in FIG. 4) to obtain information from a social media service associated with the user 548 that pertains to dietary preferences of the user 548a. As yet another example, the HMD 500a may receive inputs by one or more I/O devices (e.g., one or more I/O devices 230 shown in FIG. 4) from the user 548a to determine a dietary preference, or the HMD 500a may include an AI engine (e.g., AI engine 236 shown in FIG. 4) used to predict or suggest a dietary preference to be presented by the HMD 500a, based in part on past orders from the user 548a at the particular restaurant and/or other restaurants. Accordingly, the user 548a, when viewing through the HMD 500a, may appear to the user 548b (and other users) to be watching/view the light 554 from the light source 552. Beneficially however, the user 548a is viewing the visual content 560a, which may be relatively appealing content to the user 548a.

In order to obtain the information (e.g., menu information) from the light source 552, each of the HMDs 500a and 500b may include one or more image sensors (e.g., one or more image sensors 210) used to capture images of the textual information from the light 554. Alternatively, the respective one or more image sensors of the HMDs 500a and 500b may detect one or more indicia in the environment 550 used to obtain the restaurant menu information. For example, the one or more image sensors may observe an indicium 562 (e.g., QR code) provided by the light source 552 (or printed and posted elsewhere) used to direct the HMDs 500a and 500b to a URL to obtain the restaurant menu information. Alternatively, the one or more image sensors may observe an indicium 564 (e.g., logo or trademark of the restaurant) in the environment, with the indicium 564 providing an indication of the restaurant, thus directing the HMDs 500a and 500b to a lookup table or a server (e.g., server 234) to obtain the restaurant menu information associated with the restaurant. Additionally, each of the HMDs 500a and 500b may include an OCR engine (e.g., OCR engine 226) designed to determine the textual information from the captured images of the light 554. Alternatively, each of the HMDs 500a and 500b may communicate with a server (e.g., server 234) that hosts the restaurant menu information, and obtain the restaurant menu information.

Additionally, an enlarged view 556b represents what the user 548b may see when viewing the environment 550 through one or more lenses 504b of the HMD 500b. For example, based on one or more filters (e.g., one or more filters 206 in FIG. 4), the light 554 is blocked and a resultant location (e.g., similar to the locations 358a and 358a shown in FIG. 4) of blocked light is established at the one or more lenses 504b of the HMD 500b. The HMD 500b may generate and present visual content 560b by superimposing the visual content 560b over the light 554, which is blocked by the HMD 500b as viewed by the user 548b. Moreover, the visual content 560b may be established or initiated by the restaurant. For example, the visual content 560b may include an advertisement or promotion (e.g., "All chicken combo meals are 10% off ") from the restaurant provided to the user 548b through the HMD 500b while, for example, the user 548b is waiting behind the user 548a to order from the menu. This may be in addition to one or more menu items (e.g., "Chicken Menu") of the restaurant. In order to communicate with the restaurant, the HMD 500b may include wireless communication circuitry (e.g., wireless communication circuitry 224 shown in FIG. 4) used to obtain broadcast information from the restaurant. Additionally, the visual content 560b may be established or initiated by a third party in the form of an additional advertisement or promotion, and obtained by the HMD 500b by wireless communication circuitry. For example, the visual content 560b may include a movie showing from a cinema theater (e.g., "New movies playing at Cinema A"). The visual content 560b may include advertisements or promotions that are targeted to the user 548b. In this regard, the visual content 560b may be determined by an input from the user 548b to the HMD 500b regarding user preferences of the user 548b. Alternatively, the HMD 500b may communicate with a server (e.g., server 234 shown in FIG. 4) to access an account (e.g., account 235) of the user 548b, such as a social media account of the user 548b. As yet another alternative, the HMD 500a may include an AI engine (e.g., AI engine 236 shown in FIG. 4) used to predict or suggest advertisement preferences to be presented by the HMD 500a, based in part on past interest of the user 548b. Also, the user 548a may not see the advertisements and/or menu options presented to the user 548b by the HMD 500b. Accordingly, different HMDs (e.g., HMDs 500a and 500b) observing the same light source (e.g., light source 552) may provide different options catered to respective users (e.g., users 548a and 548b) of the HMDs 500a and 500b. Beneficially, the utility of an HMD shown and/or described herein may be significantly enhanced.

Further, in some instances, a light source may emit non-polarized light. In this regard, a polarizing film may be applied over the light source, thus causing the light source to effectively emit polarized light. As a result, HMDs described herein may function in a manner described with modified light sources that emit non-polarized light.

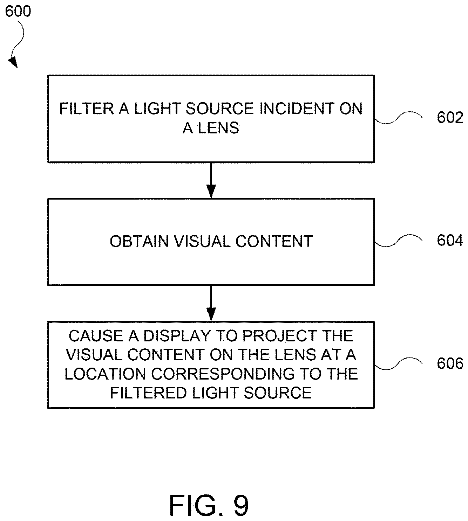

FIG. 9 illustrates an example flowchart 600 illustrating operations for devices that may include an HMD shown and/or described herein. The HMD may include one or more processors (e.g., one or more processors 220 in FIG. 4) and memory (e.g., memory 222 shown in FIG. 4) that stores executable instructions that when executed by the one or more processors cause the head-mounted display to perform one or more operations. At operation 602, a light source (e.g., light source 352a shown in FIG. 6) incident on a lens (e.g., one or more lenses 304 shown in FIG. 6) is filtered. For example, polarized light from the light source may be blocked or at least partially blocked by a filter (e.g., one or more filters 206 shown in FIG. 4). At operation 604, visual content (e.g., visual content 360a shown in FIG. 6) is obtained. At operation 606, a display (e.g., display 208 in FIG. 4) is caused, or directed, to project the visual content on the lens at a location corresponding to the filtered light source. The location may correspond to a grayscale region or a blacked out region on the lens resulting from the blocked light.

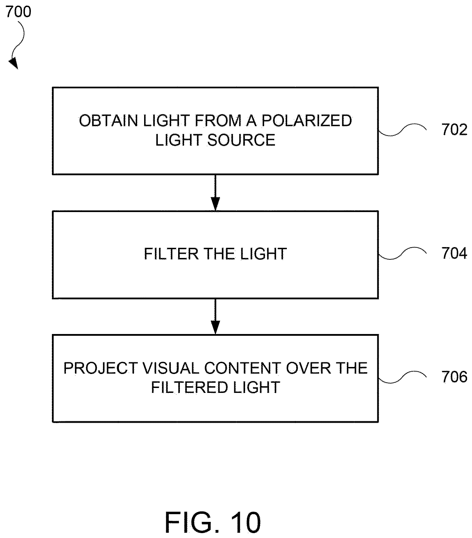

FIG. 10 illustrates an example flowchart 700 illustrating operations for devices that may include an HMD shown and/or described herein. At operation 702, light is obtained from a polarized light source. The light may be emitted from a light source (e.g., light source 452 shown in FIG. 7). At operation 704, the light is filtered by a filter (e.g., filter 206 shown in FIG. 4). At operation 706, visual content (e.g., visual content 460 shown in FIG. 7) is projected over the filtered light. For example, the visual content may be superimposed over a location of the filtered light (e.g., grayscale region or blacked out region).

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more". Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

The foregoing description of the examples has been presented for the purpose of illustration; it is not intended to be exhaustive or to limit the patent rights to the precise forms disclosed. Persons skilled in the relevant art can appreciate that many modifications and variations are possible in light of the above disclosure.

Some portions of this description describe the examples in terms of applications and symbolic representations of operations on information. These application descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Any of the steps, operations, or processes described herein may be performed or implemented with one or more hardware or software modules, alone or in combination with other devices. In one example, a software module is implemented with a computer program product comprising a computer-readable medium containing computer program code, which can be executed by a computer processor for performing any or all of the steps, operations, or processes described.

Examples also may relate to an apparatus for performing the operations herein. This apparatus may be specially constructed for the required purposes, and/or it may comprise a computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Examples also may relate to a product that is produced by a computing process described herein. Such a product may comprise information resulting from a computing process, where the information is stored on a non-transitory, tangible computer readable storage medium and may include any example of a computer program product or other data combination described herein.

Finally, the language used in the specification has been principally selected for readability and instructional purposes, and it may not have been selected to delineate or circumscribe the inventive subject matter. It is therefore intended that the scope of the patent rights be limited not by this detailed description, but rather by any claims that issue on an application based hereon. Accordingly, the disclosure of the examples is intended to be illustrative, but not limiting, of the scope of the patent rights, which is set forth in the following claims.

## Claims

1. A head-mounted display comprising:
one or more processors; and
memory coupled with the one or more processors, the memory storing executable instructions that when executed by the one or more processors cause the head-mounted display to:
filter, from a light source, light incident on a lens;
obtain visual content; and
cause a display to project the visual content on the lens at a location corresponding to the filtered light.

2. The head-mounted display of claim 1, further comprising:
a filter disposed on the lens, the filter configured to generate the filtered light by at least partially blocking the light source, wherein the executable instructions when executed by the one or more processors further cause the head-mounted display to obtain, on the lens, the location corresponding to the filtered light.

3. The head-mounted display of claim 1 or 2, wherein the executable instructions when executed by the one or more processors further cause the head-mounted display to:
adjust an output of a filter that generates the location corresponding to the filtered light.

4. The head-mounted display of any preceding claim, wherein the executable instructions when executed by the one or more processors further cause the head-mounted display to:
obtain the visual content associated with an account of a user of the head-mounted display;
preferably wherein the executable instructions when executed by the one or more processors further cause the head-mounted display to:
cause the display to present the visual content based on a social media account or a video streaming account, and the social media account or the video streaming account is associated with the account.

5. The head-mounted display of any preceding claim, further comprising:
one or more image sensors, wherein the executable instructions when executed by the one or more processors further cause the head-mounted display to:
obtain, from the one or more image sensors, information from the light source;
filter the light source to generate the filtered light; and
utilize the information to generate the visual content;
preferably wherein the executable instructions when executed by the one or more processors further cause the head-mounted display to:
obtain the information from a second display that generates the light source, and the information comprises relevant information to a user of the head-mounted display.

6. The head-mounted display of any preceding claim, wherein the executable instructions when executed by the one or more processors further cause the head-mounted display to:
obtain the location based on a grayscale region or a blacked out region; and
cause the display to superimpose the visual content over the grayscale region or the blacked out region.

7. A head-mounted display comprising:
a lens comprising a first surface and a second surface opposite the first surface;
a filter disposed on the first surface, the filter configured to block polarized light incident on the lens; and
a display configured to project visual content onto the second surface at a location corresponding to the blocked polarized light.

8. The head-mounted display of claim 7, wherein the filter comprises a polarizing component.

9. The head-mounted display of claim 8, wherein the polarizing component comprises:
a polarizer film; and/or
at least one of one or more switchable polarizers or an array of switchable polarizers.

10. The head-mounted display of any of claims 7 to 9, further comprising:
one or more image sensors configured to obtain information from the polarized light.

11. The head-mounted display of claim 10, further comprising:
one or more processors; and
memory coupled with the one or more processors, the memory storing executable instructions that when executed by the one or more processors cause the head-mounted display to project the visual content based on the obtain the information from the one or more image sensors;
preferably wherein:
the one or image sensors are further configured to obtain an image corresponding to a fiducial; and
the executable instructions when executed by the one or more processors further cause the head-mounted display to project the visual content based on the fiducial.

12. The head-mounted display of any of claims 7 to 11, further comprising:
one or more processors configured to cause the display to project the visual content as motion images.

13. A method for presenting content from a head-mounted display, the method comprising:
obtaining light from a polarized light source;
filtering the light; and
projecting, by the head-mounted display, visual content over the filtered light.

14. The method of claim 13, further comprising:
determining a location of the light incident on a lens; and
projecting the visual content at the location.

15. The method of claim 13 or 14, wherein projecting the visual content comprises:
obtaining information from the light source; and
projecting, based on the obtaining information, the visual content;
preferably wherein:
filtering the light comprises adjusting an output of a switchable polarizer.
